# EUROPÄISCHE PATENTSCHRIFT

(11) **EP 0 881 057 B1**
(45) Veröffentlichungstag und Bekanntmachung des Hinweises auf die Patenterteilung: **31.07.2002**
(21) Anmeldenummer: 97810323.2
(22) Anmeldetag: 26.05.1997
(51) Int. Cl.: B29C 70/46, B29C 43/54, B29D 31/02

(54) **Verfahren zur Herstellung einer Hülse aus thermoplastischem Verbundwerkstoff**
Process for manufacturing a bush made of composite thermoplastic material
Procédé pour la fabrication d'une bague en matériau thermoplastique composite

(43) Veröffentlichungstag der Anmeldung: 02.12.1998
(73) Patentinhaber: Sulzer Markets and Technology AG, 8401 Winterthur (CH)
(72) Erfinder: Vodermayer, Albert, Dr., 8305 Dietlikon (CH)
(74) Vertreter: Sulzer Management AG

(56) Entgegenhaltungen:
- GB-A- 2 284 782
- US-A- 5 071 506

## Beschreibung

Die Erfindung betrifft ein Verfahren zur Herstellung einer Hülse aus thermoplastischem Verbundwerkstoff gemäss Oberbegriff von Anspruch 1 sowie nach diesem Verfahren hergestellte Hülsen.

Ein derartiges Verfahren ist aus der EP 0 572 752 bekannt. Das in dieser Patentschrift offenbarte Verfahren bezieht sich insbesondere auf die Herstellung eines Werkstücks hoher Festigkeit mit einer Durchgangsöffnung, das beispielsweise aus einem bandartigen Halbzeug aus thermoplastischem Material mit Endlosfaserverstärkung aufgebaut wird.

Ausgangspunkt der vorliegenden Erfindung ist der Wunsch nach einer Hülse, beispielsweise für besondere Lager, welche in einem vorgegebenen Temperaturintervall eine verschwindend kleine Wärmeausdehnung aufweist. Für den Bereich von rund 30 bis 130 °C eignet sich ein kohlefaserverstärkter Kunststoff (mit in Umfangrichtung orientierten Fasern) zur Herstellung einer solchen Hülse, da Kohlefasern negative Wärmeausdehnungskoeffizienten besitzen (von Typ der Kohlefaser abhängiger Wert bis rund -1,3 10⁻⁶ K⁻¹), während diese Koeffizienten für Kunststoffe positiv sind. Bei der Verwendung des Kunststoffs PEEK zeigt das Verbundmaterial in Faserrichtung einen Ausdehnungskoeffizienten von praktisch Null, wenn für den Anteil der Kohlefasern (Typ HT) 60 bis 70 Volumenprozent gewählt wird. PEEK (Polyetheretherketon) weist eine Schmelztemperatur von 343°C, eine Erstarrungstemperatur von 295°C und einen Ausdehnungskoeffizienten von 47 10⁻⁶ K⁻¹ auf. Das Fliesspressen mit dem Kohlenstoff/PEEK-Verbundwerkstoff wird mit Vorteil bei 380 bis 400°C durchgeführt. Eine Formstabilität des Produkts ergibt sich, wenn das Presswerkzeug auf unter rund 250°C abgekühlt wird.

Da das Fliesspressverfahren bei einer erhöhten Temperatur durchgeführt werden muss und da für das Erreichen der Formstabilität eine Temperaturerniedrigung erforderlich ist, ergibt sich ein Problem beim Entformen des Produktes. Denn das Stück des Werkzeugs, das beim Fliesspressen die Aussenseite der Hülse bildet, zieht sich beim Abkühlen zusammen, während die Hülse in radialer Richtung praktisch keine Formänderung zeigt. Aufgrund des Schrumpfens des umschliessenden Werkzeugteils lässt sich die Hülse nicht ohne eine Beschädigung aus dem Werkzeug ausstossen.

Es ist daher Aufgabe der Erfindung, ein Verfahren zu schaffen, bei dem die Entformung der Hülse ohne Schwierigkeiten möglich ist. Diese Aufgabe wird durch das in Anspruch 1 definierte Verfahren gelöst.

Bei dem erfindungsgemässen Verfahren zur Herstellung einer Hülse aus einem Thermoplast/Faser-Verbundwerkstoff wird in einem ersten Schritt ein Wickelkörper aus einem bandförmigen Halbzeug gebildet. In einem zweiten Schritt wird der Wickelkörper durch Fliesspressen kompaktifiziert und zwar mit einem Stempel, der zusammen mit dem Wickelkörper in einen Aufnehmer eingetaucht wird. Dabei werden eine äussere Oberfläche der Hülse durch einen Mantel des Aufnehmers und eine innere Oberfläche durch einen Kern geformt. Der Wickelkörper wird auf den Kern aufgebracht und es werden der Kern sowie der Wickelkörper auf eine Temperatur über der Verarbeitungstemperatur des Verbundwerkstoffs erhitzt, während der Mantel auf eine unter dem Erstarrungs- oder Glaspunkt des Thermoplasts liegende Temperatur erwärmt wird. Beim anschliessenden Kompaktifizieren wird keine weitere Wärme dem Kern sowie dem Wickelkörper zugeführt.

Die abhängigen Ansprüche 2 bis 10 beziehen sich auf vorteilhafte Ausführungsformen des erfindungsgemässen Verfahrens.

Nachfolgend wird die Erfindung anhand der Zeichnungen erläutert. Es zeigen:
- Fig. 1: eine Einrichtung zum Herstellen eines Wickelkörpers aus einem bandförmigen Halbzeug,
- Fig. 2: ausschnittsweise einen radialen Querschnitt durch den Wickelkörper der Fig.1,
- Fig. 3: schematisch gezeichnet den Wickelkörper und die Hülse, die ein Zwischenprodukt bzw. das Endprodukt des erfindungsgemässen Verfahrens darstellen,
- Fig. 4: Vorbereitungsschritte zum Fliesspressen mit einer besonderen Presseinrichtung,
- Fig. 5: eine entsprechende Situation wie in Fig.4 für eine zweite Presseinrichtung und
- Fig.6-8: die Durchführung weiterer Verfahrensschritte mit der Einrichtung gemäss Fig.5.

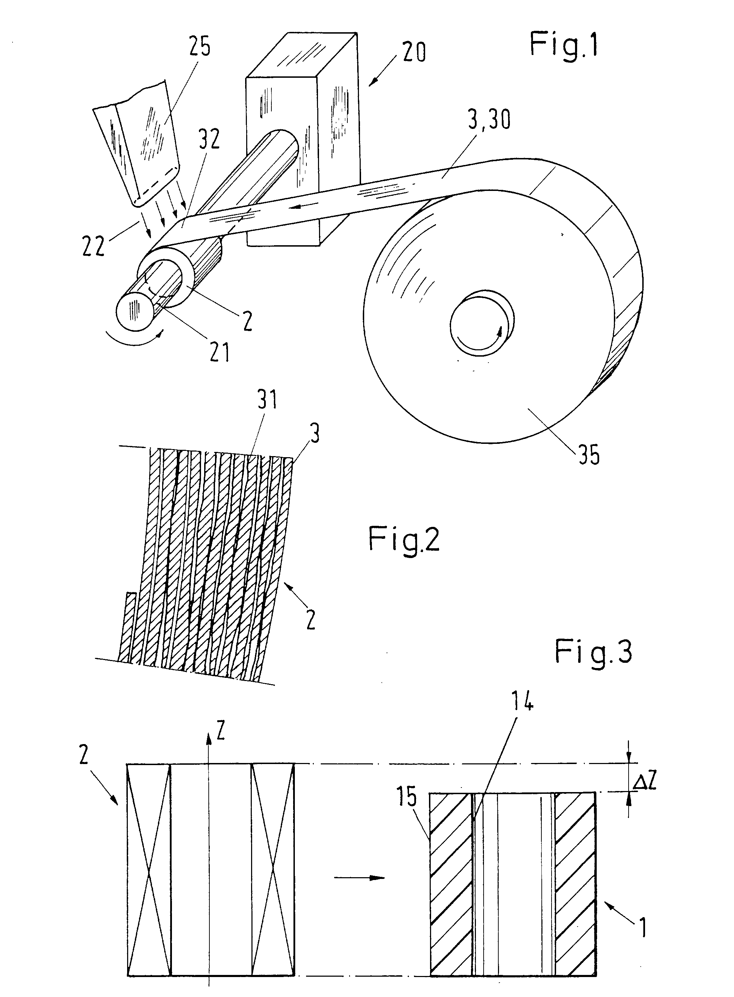

Der erste Schritt des erfindungsgemässen Verfahrens zur Herstellung einer Hülse 1 ist die Erzeugung eines Wickelkörpers 2 aus einem bandförmigen Halbzeug 3, das aus einem Faser/Thermoplast-Verbundwerkstoff 30 besteht. Dies ist in Fig.1 dargestellt. Mit einer Wickelvorrichtung 20 wird das Halbzeug 3 von einer Vorratsrolle 35 auf einen zylindrischen Stab 21 aufgebracht. Der Luftstrahl 22 eines Heissluftgebläses 25 ist auf die Aufwickelstelle 32 gerichtet und erhitzt dort das Halbzeug 3 auf die Verarbeitungstemperatur des Thermoplasts, so dass die einzelnen Lagen im Wickelkörper 2 dicht aufeinander zu liegen kommen. Zwischen benachbarten Lagen ergeben sich allerdings beim Wickeln spaltförmige Leerräume 31: siehe Fig.2.

Der zweite Schritt des erfindungsgemässen Verfahrens ist in Fig.3 schematisch dargestellt. Aus dem Zwischenprodukt, nämlich dem Wickelkörper 2, entsteht durch Fliesspressen das Endprodukt, die Hülse 1. Bei der Kompaktifizierung des zweiten Verfahrensschritts verkürzt sich die Länge des Wickelkörpers 2 in Richtung der Wickelachse Z um einen Betrag ΔZ, wobei die Porosität (Anteil des Leerraums) sich um rund eine Grössenordnung verringert.

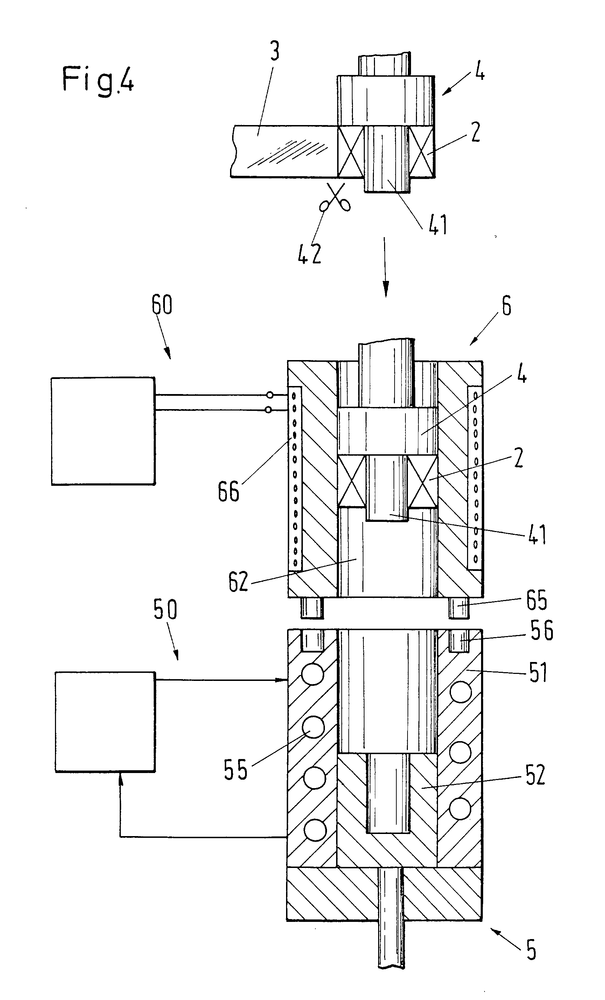

Die Innenseite 14 der Hülse 1 wird durch einen Kern 41 (siehe Fig.4) geformt, die Aussenseite 15 durch einen Mantel 51. Der Mantel 51 ist aus Stahl gefertigt und würde beim Abkühlen auf die Hülse 1 aufgeschrumpft. Mit dem erfindungsgemässen Verfahren lässt sich ein solches Aufschrumpfen vermeiden. Eine Einrichtung zur Durchführung des Verfahrens ist im unteren Teil der Fig.4 gezeigt.

Diese Einrichtung umfasst einen Aufnehmer 5 mit erwärmbarem Mantel 51, einem Stempel 4 mit Kern 41 und einem Aufheizzylinder 6. Vor der Kompaktifizierung wird der Kern 41 mit aufgebrachtem Wickelkörper 2 ausserhalb des Aufnehmers 5 bis zur Verarbeitungstemperatur des Thermoplasts aufgeheizt. Dies geschieht mit einer elektrischen Heizung 61 (Heizwicklung 60) in dem Zylinder 6, der einen massgenauen Innenraum 62 aufweist. Bei der Verarbeitungstemperatur muss der Durchmesser des Innenraums 62 mit dem Innendurchmesser des erwärmten Mantels 51 übereinstimmen; so wird es möglich, für den Durchmesser des Stempels 4 exakt den dem Mantel 51 entsprechende Wert vorzugeben. Bei Umgebungstemperatur (20°C) und für einen äusseren Durchmesser der Hülse 1 von 3 cm muss der Durchmesser des Innenraums 62 rund 0,1 mm kleiner als der Innendurchmesser des Mantels 51 sein.

Das Aufheizen des Wickelkörpers 2 muss in dem vom Aufnehmer 5 getrennten Zylinder 6 durchgeführt werden. Beim Verschieben des Wickelkörpers 2 aus dem Zylinder 6 in den Aufnehmer 5 müssen diese beiden Einrichtungsteile in Kontakt stehen. Führungshilfen in Form von Erhebungen 65 und entsprechenden Vertiefungen 56 ermöglichen eine präzise Positionierung.

Der im Aufnehmer 5 enthaltene Mantel 51 wird mit einer Heizung 50 auf eine Temperatur erwärmt, die unter dem Erstarrungs- oder Glaspunkt des Thermoplasts liegt. Die Wärme wird über Kanäle 55 und mit einem Wärmeträgermedium (beispielsweise Luft oder ein Öl) dem Mantel 51 zugeführt.

Die Pressform setzt sich aus vier Werkzeugteilen zusammen: dem Stempel 4, dem Kern 41, dem Mantel 51 und einem verschiebbaren, napfartigen Teil 52, in den der vordere Teil des Kerns 41 eintauchen kann. Beim Kompaktifizieren wird Wärme aus dem Stempel 4, dem Kern 41 und dem Wickelkörper 2 bzw. der Hülse 1 an den kühleren Mantel 51 abgegeben. Dabei verfestigt sich die Hülse 1. Anschliessend wird der Zylinder 6 vom Aufnehmer 5 entfernt, und mit einem Ausstosser 53 sowie dem Teil 52 wird die Hülse 1 aus dem Mantel 51 ausgestossen.

Wie in Fig.4 zusätzlich dargestellt ist, kann der Wickelkörper 2 auch durch Aufbringen des Halbzeugbands 3 auf den Kern 41 erzeugt werden. Das Symbol 42 (Schere) deutet an, das bei Erreichen eines gewünschten Wickeldurchmessers das Band 3 abgeschnitten wird.

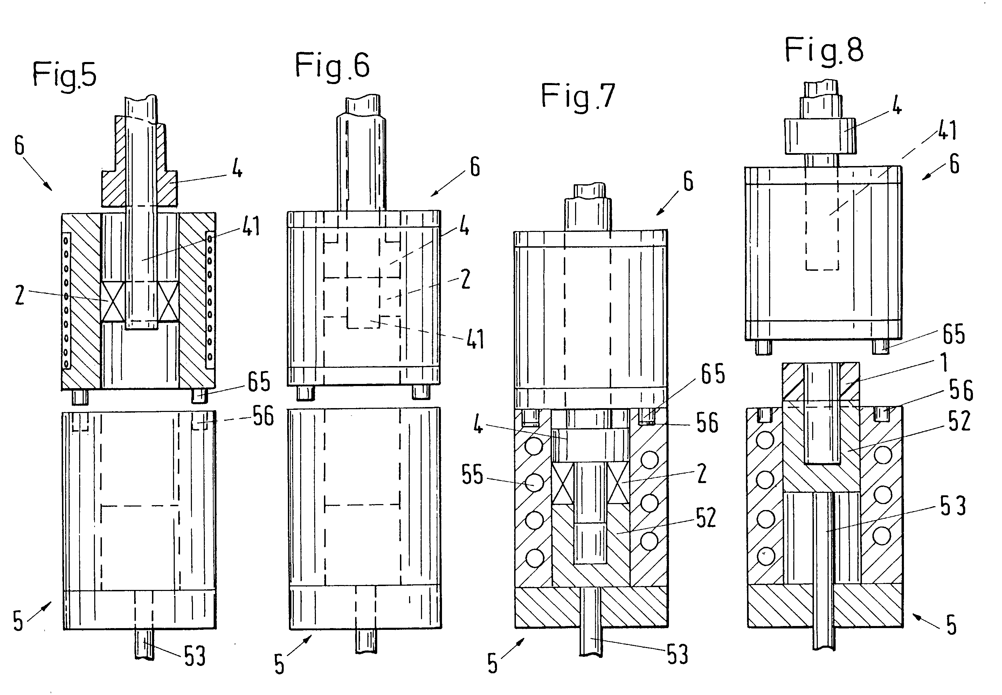

Die Figuren 5 bis 8 zeigen vier Phasen des zweiten Verfahrensschritts, der mit einer zweiten Ausführungsform der Fliesspresseinrichtung durchgeführt wird. Bei dieser Ausführungsform ist der Stempel 4 gegenüber dem Kern 41 verschiebbar ausgeführt, so dass der Stempel separat ausserhalb des Zylinders 6 erwärmt werden kann, insbesondere auf die gleiche Temperatur wie der Mantel 51 (nicht dargestellt).

In Fig.5 wird der Kern 41 sowie der Wickelkörper 2 im Zylinder 6 erhitzt. Nach der Erhitzung - Fig.6 - wird der Stempel 4 in Kontakt mit dem Wickelkörper 2 gebracht und gleichzeitig werden Stempel 4, Kern 41 und Wickelkörper 2 zur Durchführung der Kompaktifizierung in den Aufnehmer 5 eingetaucht: Fig.7. Die dabei ablaufenden Bewegungen müssen sehr rasch erfolgen (innert rund 0,1 s), damit die einzelnen Komponenten praktisch keine Temperaturänderungen erfahren. Die Kompaktifizierung wird bei der konstant gehaltenen Temperatur des Mantels (51) durchgeführt. Dabei erstarrt der Thermoplast: die Hülse 1 ist hergestellt. Der Kern 41 und der Stempel 4 können nun entfernt werden. Damit das anschliessende Ausstossen der Hülse 1 aus dem Mantel 51, der bei einer Temperaturerniedrigung schrumpfen würde, nicht behindert oder verunmöglicht wird, ist es vorgesehen, den Mantel 51 weiter auf konstanter Temperatur geheizt zu halten (Heizung 50, Fig. 4). Diese Temperatur muss einen Wert haben, der wenigstens um rund 10 K tiefer als der Erstarrungs- oder Glaspunkt des Thermoplasts liegt.

Bei der erfindungsgemässen Herstellung von kleinen Hülsen, deren Länge kleiner als rund 3 mm ist, kann auch eine Presseinrichtung verwendet werden, bei der für das Aufheizen des Wickelkörpers 2 Heissluft eingesetzt wird, und diese Wärmeabgabe auf den Wickelkörper 2 bei einem Zustand der Presseinrichtung durchgeführt wird, in dem der Stempel 4, einschliesslich Kern 41 sowie Wickelkörper 2, in den Aufnehmer 5 teilweise eingeschoben sind. Dabei wird die Heissluft über geeignet angeordnete Kanäle zubzw. abgeführt, so dass dem Kern 41 und dem Wickelkörper 2 die benötigte Heizwärme zugeführt wird.

Bei der Herstellung einer Hülse aus kohlefaserverstärktem PEEK erhitzt man den Wickelkörper 2 vor der Kompaktifizierung auf eine Temperatur zwischen 380 und 400 °C und lässt die Kompaktifizierung im Aufnehmer 5 bei einer Temperatur zwischen 150 und 250 °C, vorzugsweise zwischen 180 und 200 °C stattfinden.

Aramidfasern weisen wie Kohlenstofffasern einen negativen Ausdehnungskoeffizient auf (-2 bis -6 10⁻⁶ K⁻¹). Mit dem erfindungsgemässen Verfahren lassen sich daher auch Hülsen aus aramidfaserverstärkten Thermoplasten herstellen.

## Patentansprüche

1. Verfahren zur Herstellung einer Hülse (1) aus thermoplastischem Verbundwerkstoff (3'), der sich aus einem Thermoplast und Fasern zusammensetzt, durch Bilden eines Wickelkörpers (2) aus einem bandförmigen Halbzeug (3) und anschliessendem Kompaktifizieren des Wickelkörpers durch Fliesspressen mit einem Stempel (4), der zusammen mit dem Wickelkörper in einen Aufnehmer (5) eingetaucht wird, wobei eine äussere Oberfläche (15) der Hülse durch einen Mantel (51) des Aufnehmers und eine innere Oberfläche (14) durch einen Kern (41) geformt werden,
**dadurch gekennzeichnet, dass** der Wickelkörper (2) auf den Kern (41) aufgebracht wird, dass der Kern und der Wickelkörper auf eine Temperatur über der Verarbeitungstemperatur des Verbundwerkstoffs (3') erhitzt werden, während der Mantel (51) auf eine unter dem Erstarrungs- oder Glaspunkt des Thermoplasts liegende Temperatur erwärmt wird und dass beim anschliessenden Kompaktifizieren keine weitere Wärme dem Kern sowie dem Wickelkörper zugeführt wird.

2. Verfahren nach Anspruch 1, **dadurch gekennzeichnet, dass** beim Wickeln das Halbzeug (3) an der Aufwickelstelle (32) auf die Verarbeitungstemperatur erhitzt wird.

3. Verfahren nach Anspruch 1 oder 2, **dadurch gekennzeichnet, dass** vor der Kompaktifizierung der Kern (41) mit aufgebrachtem Wickelkörper (2) ausserhalb des Aufnehmers (5) bis zur Verarbeitungstemperatur aufgeheizt wird.

4. Verfahren nach Anspruch 3, **dadurch gekennzeichnet, dass** der Stempel (4) einschliesslich des Kerns (41) und des Wickelkörpers (3) in einem massgenauen Innenraum (62) eines Zylinders (6) aufgeheizt wird, und dass bei der Verarbeitungstemperatur der Durchmesser des Zylinderinnenraums (62) mit dem Innendurchmesser des erwärmten Mantels (51) übereinstimmt.

5. Verfahren nach Anspruch 3, **dadurch gekennzeichnet, dass** der Stempel (4) gegenüber dem Kern (41) verschiebbar ausgeführt ist, dass der Stempel separat auf die gleiche Temperatur wie der Mantel (51) erwärmt wird und dass nach der Erhitzung des Kerns sowie des Wickelkörpers (2) der Stempel in Kontakt mit dem Wickelkörper gebracht wird und gleichzeitig Stempel, Kern und Wickelkörper zur Durchführung der Kompaktifizierung in den Aufnehmer (5) eingetaucht werden.

6. Verfahren nach einem der Ansprüche 1 bis 5, **dadurch gekennzeichnet, dass** der Wickelkörper (2) durch Aufbringen des Halbzeugs (3) auf den Kern (41) erzeugt wird.

7. Verfahren nach einem der Ansprüche 1 bis 6, **dadurch gekennzeichnet, dass** die Kompaktifizierung und das anschliessende Ausstossen der Hülse (1) nach einer Entfernung des Kerns (41) und des Stempels (4) bei konstant gehaltener Temperatur des Mantels (51) durchgeführt wird.

8. Verfahren nach einem der Ansprüche 1 bis 7, **dadurch gekennzeichnet, dass** der Mantel (51) auf einer Temperatur gehalten wird, deren Wert wenigstens um rund 10 K kleiner als die Erstarrungstemperatur des Verbundwerkstoffs (30) ist.

9. Verfahren nach einem der Ansprüche 1 bis 8, **dadurch gekennzeichnet, dass** die Wärmezufuhren in die Presseinrichtung mit elektrischen Heizungen direkt und/oder über Wärmeträgermedien durchgeführt werden.

10. Verfahren nach Anspruch 9, **dadurch gekennzeichnet, dass** die Wärmeabgabe auf den Wickelkörper bei einem Zustand der Presseinrichtung durchgeführt wird, in dem der Stempel, einschliesslich Kern sowie Wickelkörper, in den Aufnehmer eingeschoben sind, und dass für diese Wärmeabgabe Heissluft eingesetzt wird.

11. Hülse, hergestellt nach einem Verfahren gemäss einem der Ansprüche 1 bis 10, welche in einem Temperaturbereich zwischen rund 30 und 130°C eine Wärmeausdehnung aufweist, die in radialer Richtung kleiner als 0,1 10⁻⁶ K⁻¹ ist.

12. Hülse nach Anspruch 11, **dadurch gekennzeichnet, dass** sie aus einem Kohlefasern und PEEK enthaltenden Verbundwerkstoff besteht.

## Claims

1. Method of manufacturing a sleeve (1) of a thermoplastic composite material (30), which is composed of a thermoplastic and fibres, by the formation of a body (2) wound from a band-like semi-finished product (3) and by subsequent compaction of the wound body through flow pressing with a plunger (4) which is inserted together with the wound body into a recipient (5), with an outer surface (15) of the sleeve being formed by a jacket (51) of the recipient and an inner surface (14) by a core (41),
**characterised in that** the wound body (2) is applied to the core (41); **in that** the core and the wound body are heated to a temperature above the processing temperature of the composite material (30) while the jacket (51) is heated to a temperature lying below the solidification or glass point of the thermoplastic; and **in that** no further heat is supplied to the core or to the wound body during the subsequent compaction.

2. Method in accordance with claim 1 **characterised in that**, during winding, the semi-finished product (3) is heated to the processing temperature at the winding location (32).

3. Method in accordance with claim 1 or claim 2 **characterised in that** the core (41) with the applied wound body (2) is heated to the processing temperature outside the recipient (5) prior to the compaction.

4. Method in accordance with claim 3 **characterised in that** the plunger (4) including the core (41) and the wound body (3) is heated up in a dimensionally accurate inner space (62) of a cylinder (6); and **in that** the diameter of the cylinder inner space (62) agrees with the inner diameter of the heated jacket (51) at the processing temperature.

5. Method in accordance with claim 3 **characterised in that** the plunger (4) is made displaceable with respect to the core (41); **in that** the plunger is separately heated to the same temperature as the jacket (51); and **in that**, after the core and the wound body (2) have been heated up, the plunger is brought into contact with the wound body, and the plunger, the core and the wound body are simultaneously inserted into the recipient (5) for carrying out the compaction.

6. Method in accordance with one of the claims 1 to 5 **characterised in that** the wound body (2) is produced by application of the semi-finished product (3) to the core (41).

7. Method in accordance with one of the claims 1 to 6 **characterised in that** the compaction and the subsequent expulsion of the sleeve (1) are performed after a removal of the core (41) and the plunger (4) at a temperature of the jacket (51) which is held constant.

8. Method in accordance with one of the claims 1 to 7, **characterised in that** the jacket (51) is held at a temperature, the value of which is at least about 10 K less than the solidification temperature of the composite material (30).

9. Method in accordance with one of the claims 1 to 8 **characterised in that** the introduction of heat into the press apparatus is performed directly by means of electrical heaters and/or via heat transport media.

10. Method in accordance with claim 9 **characterised in that** the heat transfer to the wound body is performed in a state of the press apparatus in which the plunger, including the core and the wound body, is pushed into the recipient; and **in that** hot air is used for this heat transfer.

11. Sleeve, manufactured by a method in accordance with one of the claims 1 to 10, which has a coefficient of thermal expansion which is less than 0.1 10⁻⁶ K⁻¹ in the radial direction in a temperature range between about 30 and 130°C.

12. Sleeve in accordance with claim 11 **characterised in that** it consists of a composite material containing carbon fibres and PEEK.

## Revendications

1. Procédé de fabrication d'un manchon (1) en un matériau composite thermoplastique (3') qui est constitué d'une matière thermoplastique et de fibres, par formage d'un corps enroulé (2) à partir d'un demi-produit en forme de bande (3) et par un compactage subséquent du corps enroulé par formage par fluage avec un poinçon (4) quia est plongé ensemble avec le corps enroulé dans un organe de réception (5), où une surface extérieure (15) du manchon est formée par une enveloppe (51) de l'organe de réception, et une surface intérieure (14) par un coeur (41), **caractérisé en ce que** le corps enroulé (2) est appliqué sur le coeur (41), **en ce que** le coeur et le corps enroulé sont chauffés à une température au-dessus de la température de traitement du matériau composite (3') tandis que l'enveloppe (51) est chauffée à une température située en dessous du point de solidification ou de vitrification de la matière thermoplastique et **en ce que**, lors du compactage suivant, aucune chaleur supplémentaire n'est amenée au coeur et au corps enroulé.

2. Procédé selon la revendication 1, **caractérisé en ce que** lors de l'enroulement, le demi-produit (3) est chauffé à l'emplacement d'enroulement (32) à la température de traitement.

3. Procédé selon la revendication 1 ou 2, **caractérisé en ce qu'**avant le compactage, le coeur (41) sur lequel est placé le corps enroulé (2) sont chauffés à l'extérieur de l'organe de réception (5) jusqu'à la température de traitement.

4. Procédé selon la revendication 3, **caractérisé en ce que** le poinçon (4), y compris le coeur (41) et le corps enroulé (3), sont chauffés dans un espace intérieur (62) à dimensions exactes d'un cylindre (6), et **en ce qu'**à la température de traitement, le diamètre de l'espace intérieur (62) du cylindre coïncide avec le diamètre intérieur de l'enveloppe chauffée (51).

5. Procédé selon la revendication 3, **caractérisé en ce que** le poinçon (4) est déplaçable par rapport au coeur (41), **en ce que** le poinçon est chauffé séparément à la même température que l'enveloppe (51) et **en ce qu'**après l'échauffement du coeur ainsi que du corps enroulé (2), le poinçon est amené en contact avec le corps enroulé, et que le poinçon, le coeur et le corps enroulé sont plongés en même temps dans l'organe de réception (5) pour exécuter le compactage.

6. Procédé selon l'une des revendications 1 à 5, **caractérisé en ce que** le corps enroulé (2) est produit par l'application du produit demi-fini (3) sur le coeur (41).

7. Procédé selon l'une des revendications 1 à 6, **caractérisé en ce que** le compactage et l'éjection suivante du manchon (1) sont effectués après un retrait du coeur (41) et du poinçon (4), à une température maintenue constante de l'enveloppe (51).

8. Procédé selon l'une des revendications 1 à 7, **caractérisé en ce que** l'enveloppe (51) est maintenue à une température dont la valeur est au moins environ 10 K plus petite que la température de solidification du matériau composite (30).

9. Procédé selon l'une des revendications 1 à 8, **caractérisé en ce que** les amenées de chaleur dans l'installation de compression sont effectuées avec des chauffages électriques directement et/ou par des fluides caloporteurs.

10. Procédé selon la revendication 9, **caractérisé en ce que** l'émission de chaleur sur le corps enroulé est effectuée dans un état de l'installation de compression où le poinçon, avec le coeur ainsi que le corps enroulé, sont poussés dans l'organe de réception, et que pour cette émission de chaleur, de l'air chaud est utilisé.

11. Manchon, fabriqué conformément à un procédé selon l'une des revendications 1 à 10, qui présente dans une plage de température entre environ 30 et 130°C une dilatation thermique qui, dans la direction radiale, est plus petite que 0,1 10⁻⁶ K⁻¹.

12. Manchon selon la revendication 11, **caractérisé en ce qu'**il est constitué d'un matériau composite contenant des fibres de carbone et du PEEK.
